# EUROPEAN PATENT APPLICATION

(11) **EP 4 517 898 A1**
(43) Date of publication of application: **05.03.2025**
(21) Application number: 22941909.8
(22) Date of filing: 16.05.2022
(51) Int. Cl.: H01M 10/056

(54) **ELECTROLYTE, SECONDARY BATTERY COMPRISING SAME, BATTERY MODULE, BATTERY PACK, AND ELECTRIC APPARATUS**

(71) Applicant: Contemporary Amperex Technology (Hong Kong) Limited, Hong Kong (HK)
(72) Inventor: PENG, Chang, Ningde City, Fujian 352100 (CN); CHEN, Peipei, Ningde City, Fujian 352100 (CN)
(74) Representative: Jacob, Reuben Ellis
(86) International application number: PCT/CN2022/093000
(87) International publication number: WO 2023/220857

(57) **Abstract**

An electrolyte, a battery module (4), a battery pack (1), and an electric apparatus. The electrolyte comprises a solvent and a fluorine-containing lithium salt, wherein the electrochemical stability coefficient x=S_{F}/(S_{F}+4_{SH}) of the electrolyte is 0.18-0.6, optionally 0.25-0.55, and S_{F} and S_{H} can be determined by means of a recorded measurement method. A secondary battery (5) using the electrolyte has good electrochemical stability, which helps to improve the storage property of and the cycling performance of the secondary battery (5).

## Description

### TECHNICAL FIELD

This application relates to the technical field of lithium batteries, and in particular, to an electrolyte solution and a secondary battery containing same, a battery module, a battery pack, and an electrical device.

### BACKGROUND

In recent years, with secondary batteries applied more widely in many industries such as electric vehicles, electric motorcycles, aerospace, hydro-, wind-, and solar power stations, people have put forward increasingly more requirements on the performance of the secondary batteries. One of the requirements is high storage performance and cycle performance of the secondary batteries. However, the existing industrially applicable electrolyte solutions are prone to be oxidized and decomposed at a high voltage, thereby deteriorating the performance of the secondary batteries. Therefore, how to provide an electrolyte solution of stable performance at a high voltage to improve the storage performance and cycle performance of secondary batteries is still an urgent technical challenge.

### SUMMARY

This application is developed to meet the above challenge. An objective of this application is to provide an electrolyte solution. The electrolyte solution is of high stability at a high voltage, so as to improve the storage performance and cycle performance of secondary batteries.

To achieve the above objective, this application provides an electrolyte solution and a secondary battery containing same, a battery module, a battery pack, and an electrical device.

A first aspect of this application provides an electrolyte solution, including a solvent and a fluorine-containing lithium salt. An electrochemical stability coefficient of the electrolyte solution is x = S_{F}/(S_{F} + 4S_{H}), ranging from 0.18 to 0.6, optionally 0.25 to 0.55.

S_{F} is a peak area of fluorine except fluorine corresponding to a lithium salt and fluorine corresponding to 4-fluoropyridine in a chemical shift range of -280 ppm to 80 ppm observed in fluorine nuclear magnetic resonance NMR spectroscopy for a mixture of the electrolyte solution and the 4-fluoropyridine mixed at a mass ratio of 1:1. A peak area of the fluorine corresponding to the 4-fluoropyridine in a chemical shift range of -102 ppm to -104 ppm is normalized to 1.

S_{H} is a peak area of hydrogen except hydrogen corresponding to deuterated acetonitrile and 4-fluoropyridine in a chemical shift range of 0.5 ppm to 10 ppm observed in hydrogen nuclear magnetic resonance NMR spectroscopy for a mixture of the electrolyte solution and the 4-fluoropyridine mixed at a mass ratio of 1:1. A peak area of the hydrogen corresponding to the 4-fluoropyridine in a chemical shift range of 7.0 ppm to 7.2 ppm and a chemical shift range of 8.45 ppm to 8.65 ppm is normalized to 1.

The electrolyte solution contains neither the deuterated acetonitrile nor the 4-fluoropyridine.

When the chemical stability coefficient of the electrolyte solution satisfies the above relation, the electrolyte solution is highly stable, and is compatible with both high-voltage positive and negative electrodes, thereby improving the storage performance and cycle performance of the secondary battery.

In any embodiment, optionally, the electrolyte solution includes a first solvent and a second solvent.

The first solvent is one or more selected from a fluoroether, a fluorocarbonate ester, a fluorocarboxylate ester, a fluorobenzene, or a fluorosulfone.

Optionally, the first solvent is one or more of 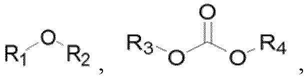 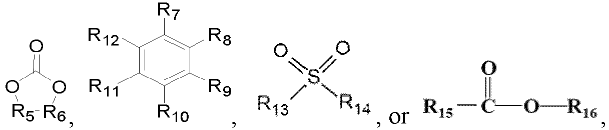 where R₁, R₃, R₅, and R₁₃ each are independently selected from C₁ to C₆ fluoroalkanes; R₂, R₄, R₆, R₁₄, R₁₅, and R₁₆ each are independently selected from C₁ to C₆ alkanes or C₁ to C₆ fluoroalkanes; R₇ to R₁₂ each are independently selected from a C₁ to C₆ fluoroalkane, fluorine, or hydrogen; at least one of R₇ to R₁₂ is selected from fluorine or a fluoroalkane; and at least one of R₁₅ or R₁₆ is selected from C₁ to C₆ fluoroalkanes.

Further optionally, the first solvent is one or more of

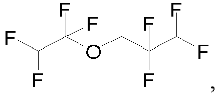

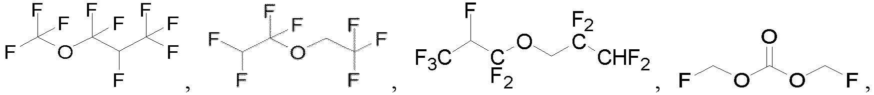

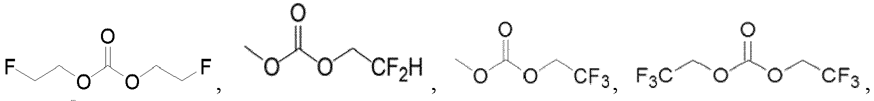

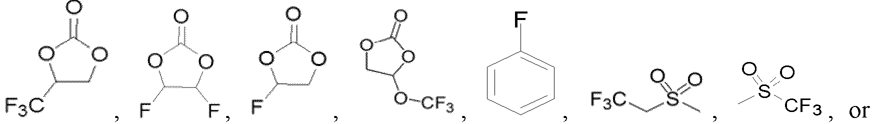

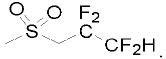

The second solvent is one or more selected from a non-fluorinated carbonate ester, a non-fluorinated carboxylate ester, a non-fluorinated ether, or a non-fluorinated sulfone.

Optionally, the second solvent is one or more of 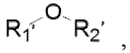 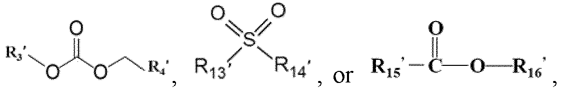 where R₁', R₂', R₃', R₁₃', R₁₄', and R₁₆' each are independently selected from C₁ to C₆ alkanes; and R₄' and R₁₅' each are independently selected from a C₁ to C₆ alkane or hydrogen.

Optionally, the second solvent is one or more of ethyl methyl carbonate, dimethyl carbonate, diethyl carbonate, ethylene carbonate, propylene carbonate, methyl formate, methyl acetate, ethyl acetate, propyl acetate, methyl propionate, ethyl propionate, or propyl propionate.

When the first solvent and the second solvent are selected from the above solvents, the solvent can combine with a lithium salt in the electrolyte solution to form a special solvation structure, thereby reducing side reactions of the solvent on the surfaces of the positive and negative electrodes and increasing the lifespan of the secondary battery.

In any embodiment, optionally, a mass percent y₁ of the first solvent is 10% to 100%, optionally 45% to 100%, and further optionally 80% to 100%, based on a total mass of the first solvent and the second solvent.

In any embodiment, optionally, a mass percent y₂ of the second solvent is 0% to 90%, optionally 0% to 55%, and further optionally 0% to 20%, based on a total mass of the first solvent and the second solvent.

In any embodiment, optionally, the mass percent y₁ of the first solvent and a mass percent y₂ of the second solvent satisfy: y₁/y₂ ≥ 0.82, optionally y₁/y₂ ≥ 2.33, further optionally y₁/y₂ ≥ 4, and still further optionally y₁/y₂ ≥ 5.67.

When the mass percent of the first solvent and the mass percent of the second solvent fall within the above ranges, this application further improves the stability of the electrolyte solution.

In any embodiment, optionally, the electrolyte solution further includes a film-forming additive. The film-forming additive is one or more selected from a chain or cyclic sulfate ester, a chain or cyclic sulfonate ester, a chain or cyclic carbonate ester, a polycyclic sulfate ester, or a polycyclic sulfonate ester.

Optionally, the film-forming additive is one or more of 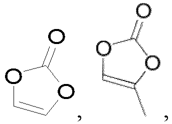 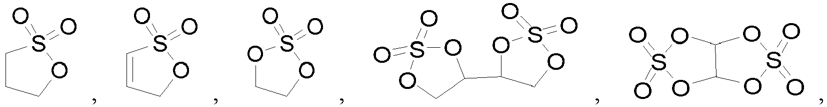 or

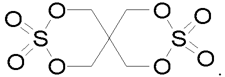

Further optionally, the film-forming additive is one or more of

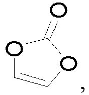

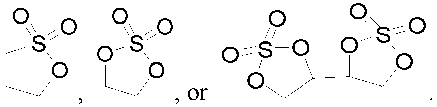

The film-forming additive can form a film on the negative electrode preferentially, thereby reducing the loss of active lithium, and in turn, improving battery performance.

In any embodiment, a mass percent of the film-forming additive is 0.1% to 10%, optionally 0.5% to 7%, and further optionally 1% to 5%, based on a total mass of the first solvent and the second solvent.

In any embodiment, optionally, the film-forming additive includes 0.5% to 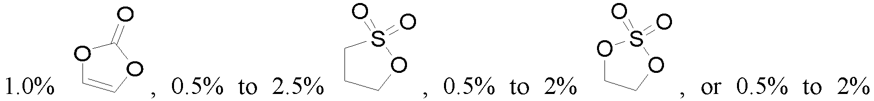 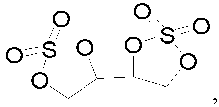 based on a total mass of the first solvent and the second solvent.

When the electrolyte solution includes the film-forming additive added at the specified mass percent, this application further improves the stability of the electrolyte solution, thereby further improving the storage performance and cycle performance of the corresponding secondary battery.

In any embodiment, optionally, the lithium salt includes one or more of lithium hexafluorophosphate or lithium bis(fluorosulfonyl)imide.

When the electrolyte solution includes the above lithium salt, this application improves the electron conductivity of the electrolyte solution, thereby improving the performance of the secondary battery.

In any embodiment, optionally, a concentration of the lithium salt is 0.7 to 2.5 mol/L, and optionally 1 to 1.5 mol/L.

In any embodiment, an acidity of the electrolyte solution is less than or equal to 50 ppm, and a purity of each solvent in use is greater than or equal to 99.8%.

When the acidity and purity of the electrolyte solution fall within the above ranges, the electrolyte solution is of high stability and is less prone to side reactions, thereby improving the cycle performance of the secondary battery.

A second aspect of this application provides a secondary battery. The secondary battery includes the electrolyte solution according to the first aspect of this application. The secondary battery may be prepared by a secondary battery preparation method commonly used in this field.

In any embodiment, optionally, a mass percent of Mn in a positive active material of the secondary battery is greater than or equal to 25%, based on a total mass of the positive active material.

Optionally, the positive active material is one or more of LiMₚMn₂₋ₚO₄, LiN_{q}Mn_{1-q}PO₄, or Li₁₊ₜMn_{1-w}L_{w}O₂₊ₜ, where 0 ≤ p ≤ 1, 0 ≤ q ≤ 0.5, 0 ≤ t ≤ 1, 0 ≤ w ≤ 0.5; and M, N, and L each independently represent one or more of Ni, Co, Fe, Cr, V, Ti, Zr, La, Ce, Rb, P, W, Nb, Mo, Sb, B, Al, or Si.

Further optionally, the positive active material is one or more of LiMₚMn₂₋ₚO₄ or Li₁₊ₜMn_{1-w}L_{w}O₂₊ₜ.

Further optionally, the positive active material is one or more of LiNi_{0.5}Mn_{1.5}O₄, LiNi_{0.5}Co_{0.2}Mn_{0.3}O₂, Li₂MnO₃, or LiMnPO₄.

When the positive active material of the secondary battery is of the above types, this application increases the energy density of the secondary battery, reduces the manufacturing cost, and gives rise to little environmental pollution.

In any embodiment, optionally, particles of the positive active material are monocrystalline or quasi-monocrystalline.

When the positive active material is monocrystalline, the active material is not prone to fragmenting, thereby reducing the probability of exposing a new surface, and in turn, reducing side reactions of the electrolyte solution, and improving the stability of the electrolyte solution.

In any embodiment, optionally, a particle diameter of the positive active material is 1 to 20 µm, and optionally 3 to 15 µm.

In any embodiment, optionally, a specific surface area of the positive active material is not greater than 1.5 m²/g, and optionally is 0.1 m²/g to 1 m²/g.

When the particle diameter and surface area of the positive active material fall within the above range, this application reduces the side reactions, improves the stability of the electrolyte solution, and at the same time, and avoids an increase in the energy consumption of the process and deterioration of the processing performance of the positive electrode plate due to an excessively large particle diameter.

A third aspect of this application provides a battery module. The battery module includes the secondary battery according to the second aspect of this application. The battery module may be prepared by a battery module preparation method commonly used in this field.

A fourth aspect of this application provides a battery pack. The battery pack includes the battery module according to the third aspect of this application. The battery pack may be prepared by the battery pack preparation method commonly used in this field.

A fifth aspect of this application provides an electrical device. The electrical device includes at least one of the secondary battery according to the second aspect of this application, the battery module according to the third aspect of this application, or the battery pack according to the fourth aspect of this application.

This application achieves at least the following beneficial effects:

In the electrolyte solution disclosed in this application, the electrochemical stability coefficient is x = S_{F}/(S_{F} + 4S_{H}), ranging from 0.18 to 0.6, optionally 0.25 to 0.55, thereby improving the stability of the electrolyte solution, making the electrolyte solution highly compatible with the positive and negative electrodes, reducing the damage caused by the electrolyte solution to the surface of the positive active material after generation of hydrofluoric acid, reducing new exposed active sites, and in turn, reducing side reactions of the electrolyte solution and improving the storage performance and cycle performance of the secondary battery. At the same time, the electrochemical stability coefficient falling within the above range also reduces the damage caused by the generated hydrofluoric acid to the solid electrolyte interface (SEI) film of the negative electrode, and prevents a large amount of solvent from undergoing reduction at the negative electrode, where the reduction leads to loss of a large amount of active lithium and further deteriorates the storage performance and cycle performance of the secondary battery.

The battery module, the battery pack, and the electrical device according to this application include the secondary battery according to this application, and therefore, possess at least the same advantages as the secondary battery.

### BRIEF DESCRIPTION OF DRAWINGS

FIG. 1 is a schematic diagram of a secondary battery according to an embodiment of this application;
FIG. 2 is an exploded view of a secondary battery shown in FIG. 1 according to an embodiment of this application;
FIG. 3 is a schematic diagram of a battery module according to an embodiment of this application;
FIG. 4 is a schematic diagram of a battery pack according to an embodiment of this application;
FIG. 5 is an exploded view of a battery pack shown in FIG. 4 according to an embodiment of this application; and
FIG. 6 is a schematic diagram of an electrical device that uses a secondary battery as a power supply according to an embodiment of this application.

List of reference numerals:
1. battery pack; 2. upper box; 3. lower box; 4. battery module; 5. secondary battery; 51. housing; 52. electrode assembly; 53. cover plate

### DETAILED DESCRIPTION OF EMBODIMENTS

The following describes and discloses in detail some embodiments of an electrolyte solution, a secondary battery, a battery module, a battery pack, and an electrical device according to this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified, the term "or" used herein is inclusive. For example, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

In practical operations, the inventor hereof finds that most of electrolyte solutions in the prior art are not suitable for working at a high voltage such as a voltage of 4.2 V or above. That is because such electrolyte solutions is of low stability, and are prone to decompose at a high voltage to produce a large amount of hydrofluoric acid (HF) that corrodes the positive active material and deteriorates the performance of the secondary battery.

Through a large number of experiments, the inventor hereof unexpectedly finds that when the integrated areas S_{H} and S_{F} of the corresponding peaks of the electrolyte solution observed in hydrogen nuclear magnetic resonance NMR spectroscopy and fluorine NMR spectroscopy satisfy: x = S_{F}/(S_{F} + 4S_{H}), where x ranges from 0.18 to 0.6, optionally 0.25 to 0.55, the electrolyte solution still exhibits high electrochemical stability and is well compatible with the positive and negative electrodes even at a high voltage, thereby reducing the damage caused by the electrolyte solution to the positive and negative electrode materials after the generation of hydrofluoric acid, and in turn, improving the storage performance and cycle performance of the secondary battery. In addition, by further adjusting the types and dosages of various solvents and additives in the electrolyte solution, this application can further improve the storage performance and cycle performance of the secondary battery.

### [Electrolyte solution]

A first aspect of this application provides an electrolyte solution, including a solvent and a fluorine-containing lithium salt. An electrochemical stability coefficient of the electrolyte solution is x = S_{F}/(S_{F} + 4S_{H}), ranging from 0.18 to 0.6, optionally 0.25 to 0.55.

S_{F} is a peak area of fluorine except fluorine corresponding to a lithium salt and fluorine corresponding to 4-fluoropyridine in a chemical shift range of -280 ppm to 80 ppm observed in fluorine nuclear magnetic resonance NMR spectroscopy for a mixture of the electrolyte solution and the 4-fluoropyridine mixed at a mass ratio of 1:1. A peak area of the fluorine corresponding to the 4-fluoropyridine in a chemical shift range of -102 ppm to -104 ppm is normalized to 1.

S_{H} is a peak area of hydrogen except hydrogen corresponding to deuterated acetonitrile and 4-fluoropyridine in a chemical shift range of 0.5 ppm to 10 ppm observed in hydrogen nuclear magnetic resonance NMR spectroscopy for a mixture of the electrolyte solution and the 4-fluoropyridine mixed at a mass ratio of 1:1. A peak area of the hydrogen corresponding to the 4-fluoropyridine in a chemical shift range of 7.0 ppm to 7.2 ppm and a chemical shift range of 8.45 ppm to 8.65 ppm is normalized to 1.

The electrolyte solution contains neither the deuterated acetonitrile nor the 4-fluoropyridine.

Although the underlying mechanism still remains unclear, the inventor hereof finds that, in the electrolyte solution disclosed in this application, when the electrochemical stability coefficient x satisfies x = S_{F}/(S_{F} + 4S_{H}) and ranges from 0.18 to 0.6, this application improves the stability of the electrolyte solution, makes the electrolyte solution highly compatible with the positive and negative electrodes, reduces the damage caused by the electrolyte solution to the surface of the positive active material after generation of hydrofluoric acid, and reduces new exposed active sites, thereby reducing side reactions of the electrolyte solution and improving the storage performance and cycle performance of the secondary battery. At the same time, the electrochemical stability coefficient falling within the above range also reduces the damage caused by the generated hydrofluoric acid to the SEI film of the negative electrode, and prevents a large amount of solvent from undergoing reduction at the negative electrode, where the reduction leads to loss of a large amount of active lithium and further deteriorates the storage performance and cycle performance of the secondary battery. Optionally, when x is 0.25 to 0.55, this application further improves the compatibility between the electrolyte solution and the positive and negative electrodes, thereby improving the storage performance and cycle performance of the secondary battery.

It is hereby noted that although this application specifies that the electrolyte solution contains neither deuterated acetonitrile nor 4-fluoropyridine, the reason for this is: in determining S_{F} and S_{H} by nuclear magnetic resonance NMR, the deuterated acetonitrile is required as an NMR test solvent, and the 4-fluoropyridine is required as a reference. If the electrolyte solution also contains the reference, the characteristic peaks of the same components in the electrolyte solution are not distinguishable from the reference, thereby causing inaccurate measurement results of S_{F} and S_{H}. A person skilled in the art understands that, in the NMR spectroscopy test, different deuterated solvents and references may be selected as required in the test. In addition, the mass ratio of the electrolyte solution to the 4-fluoropyridine may be determined as required in the test. For example, the mass ratio of the electrolyte solution to the 4-fluoropyridine may be 1:1.

In some embodiments, optionally, the electrolyte solution includes a first solvent and a second solvent.

The first solvent is one or more selected from a fluoroether, a fluorocarbonate ester, a fluorocarboxylate ester, a fluorobenzene, or a fluorosulfone.

Optionally, the first solvent is one or more of 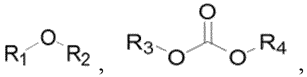 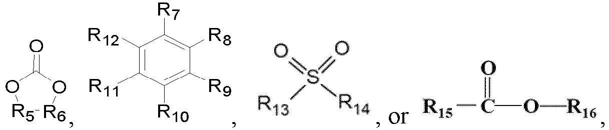 where R₁, R₃, R₅, and R₁₃ each are independently selected from C₁ to C₆ fluoroalkanes; R₂, R₄, R₆, R₁₄, R₁₅, and R₁₆ each are independently selected from C₁ to C₆ alkanes or C₁ to C₆ fluoroalkanes; R₇ to R₁₂ each are independently selected from a C₁ to C₆ fluoroalkane, fluorine, or hydrogen; at least one of R₇ to R₁₂ is selected from fluorine or a fluoroalkane; and at least one of R₁₅ or R₁₆ is selected from C₁ to C₆ fluoroalkanes.

Further optionally, the first solvent is one or more of 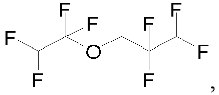 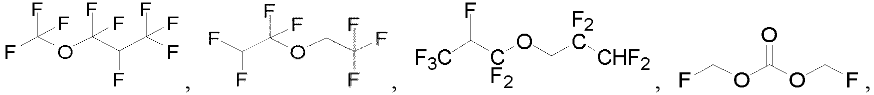 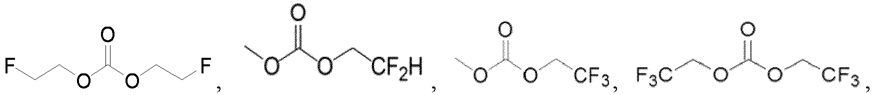 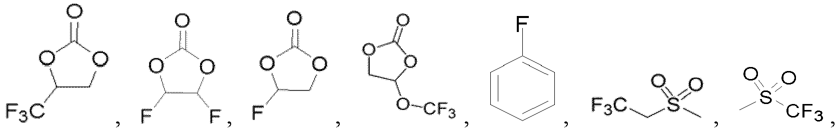 or

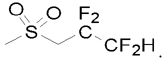

The second solvent is one or more selected from a non-fluorinated carbonate ester, a non-fluorinated carboxylate ester, a non-fluorinated ether, or a non-fluorinated sulfone.

Optionally, the second solvent is one or more of 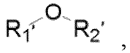 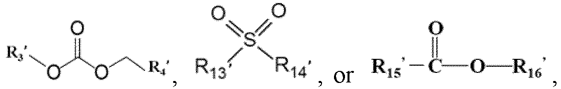 where R₁', R₂', R₃', R₁₃', R₁₄', and R₁₆' each are independently selected from C₁ to C₆ alkanes; and R₄' and R₁₅' each are independently selected from a C₁ to C₆ alkane or hydrogen.

Optionally, the second solvent is one or more of ethyl methyl carbonate, dimethyl carbonate, diethyl carbonate, ethylene carbonate, propylene carbonate, methyl formate, methyl acetate, ethyl acetate, propyl acetate, methyl propionate, ethyl propionate, or propyl propionate.

When the first solvent and the second solvent are selected from the above solvents, the solvent can combine with a lithium salt in the electrolyte solution to form a special solvation structure, thereby facilitating formation of a dense protection film in the initialization stage, facilitating desolvation, and in turn, reducing side reactions of the solvent on the surfaces of the positive and negative electrodes and improving the cycle performance of the secondary battery.

In some embodiments, optionally, a mass percent y₁ of the first solvent is 10% to 100%, optionally 45% to 100%, and further optionally 80% to 100%, based on a total mass of the first solvent and the second solvent. As an example, the mass percent y₁ of the first solvent may be 10%, 30%, 45%, 70%, 80%, 90%, or 100%.

In some embodiments, optionally, a mass percent y₂ of the second solvent is 0% to 90%, optionally 0% to 55%, and further optionally 0% to 20%, based on a total mass of the first solvent and the second solvent. As an example, the mass percent y₂ of the second solvent may be 70%, 55%, 40%, 30%, 20%, 10%, or 0%.

When the mass percent of the first solvent and the mass percent of the second solvent fall within the above ranges, this application further improves the stability of the electrolyte solution, and improves the storage performance and cycle performance of the secondary battery.

In some embodiments, optionally, the sum of mass of the first solvent and the second solvent is 60% to 90%, and optionally 60% to 87.5%, of the total mass of the electrolyte solution of this application.

When the aggregate mass percent of the first solvent and the second solvent in the electrolyte solution of this application falls within the above range, this application further improves the stability of the electrolyte solution.

In some embodiments, optionally, the mass percent y₁ of the first solvent and a mass percent y₂ of the second solvent satisfy: y₁/y₂ ≥ 0.82, optionally y₁/y₂ ≥ 2.33, further optionally y₁/y₂ ≥ 4, and still further optionally y₁/y₂ ≥ 5.67.

When the mass percent y₁ of the first solvent and the mass percent y₂ of the second solvent satisfy the above relation, the electrolyte solution is of higher electrochemical stability, thereby further improving the compatibility between the electrolyte solution and the positive and negative electrodes, reducing side reactions, and improving the storage performance and cycle performance of the secondary battery.

In some embodiments, optionally, the mass percent y₁ of the first solvent and the mass percent y₂ of the second solvent satisfy: 0 ≤y₁ × y₂/(y₁ + y₂) ≤ 0.25, optionally 0 ≤ y₁ × y₂/(y₁ + y₂) ≤ 0.16, and further optionally, 0 ≤y₁ × y₂/(y₁ +y₂) ≤ 0.09.

When the mass percent y₁ of the first solvent and the mass percent y₂ of the second solvent satisfy the above relation, this application further improves the stability of the electrolyte solution, thereby improving the storage performance and cycle performance of the secondary battery.

In some embodiments, optionally, the electrolyte solution further includes a film-forming additive. The film-forming additive is one or more selected from a chain or cyclic sulfate ester, a chain or cyclic sulfonate ester, a chain or cyclic carbonate ester, a polycyclic sulfate ester, or a polycyclic sulfonate ester.

Optionally, the film-forming additive is one or more of 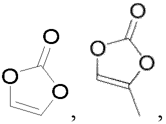 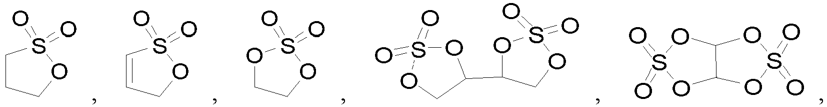 or 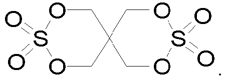 further optionally, the film-forming additive is one or more of

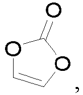

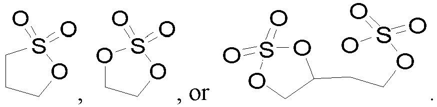

The film-forming additive can form a film on the negative electrode preferentially, thereby reducing the loss of active lithium, and in turn, improving the storage performance and cycle performance of the secondary battery.

In some embodiments, a mass percent of the film-forming additive is 0.1% to 10%, optionally 0.5% to 7%, and further optionally 1% to 5%, based on a total mass of the first solvent and the second solvent.

In some embodiments, optionally, the film-forming additive includes 0.5% 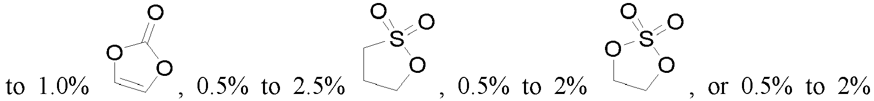 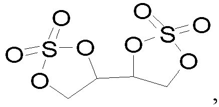 based on a total mass of the first solvent and the second solvent.

When the electrolyte solution includes the film-forming additive added at the specified mass percent, this application further improves the stability of the electrolyte solution, thereby further improving the storage performance and cycle performance of the corresponding secondary battery.

In some embodiments, optionally, the lithium salt includes one or more of lithium hexafluorophosphate or lithium bis(fluorosulfonyl)imide.

In some embodiments, optionally, a concentration of the lithium salt is 0.7 to 2.5 mol/L, and optionally 1 to 1.5 mol/L.

When the electrolyte solution includes the lithium salt of the specified concentration, the viscosity of the electrolyte solution is moderate, thereby improving the electron conductivity of the electrolyte solution, and in turn, improving the performance of the secondary battery. However, when the concentration of the electrolyte lithium salt is excessively high, the overall concentration of the electrolyte solution increases, but the dissociation degree of the salt in the electrolyte solution decreases, and the viscosity of the electrolyte solution also increases, which in turn leads to a decrease in the electron conductivity of the electrolyte solution.

As used herein, the concentration units "M" and "mol/L" are used interchangeably.

In some embodiments, optionally, the electrolyte solution of this application further includes other functional additives, and the other functional additives may be any additives known in the art that are applicable in the context of this application. As an example, the electrolyte solution further includes at least one of a flame retardant additive, an overcharge protection additive, or a conductive additive. The inclusion of the above additives in the electrolyte solution can further improve the performance of the electrolyte solution.

In some embodiments, optionally, an acidity of the electrolyte solution is less than or equal to 50 ppm, and a purity of each solvent in use is greater than or equal to 99.8%.

When the acidity and purity of the electrolyte solution fall within the above ranges, the electrolyte solution is of high stability and is less prone to side reactions, thereby improving the cycle performance of the secondary battery.

It is hereby noted that the acidity of the electrolyte solution in this application may be determined by a method commonly used in this field. Specifically, with reference to HG/T4067-2015, a triethylamine standard solution may be used to titrate the free acid in the electrolyte solution.

It is hereby noted that a person skilled in the art understands that the electrolyte solution described in this application may be prepared by a method commonly used by a person skilled in the art. For example, the electrolyte solution described in this application may be prepared by mixing well the first solvent, the second solvent, the lithium salt, the film-forming additive, other additives, and the like at a specified ratio under the protection of an inert gas.

### [Secondary battery]

A second aspect of this application provides a secondary battery. The secondary battery includes the electrolyte solution according to the first aspect of this application.

Generally, the secondary battery includes a positive electrode plate, a negative electrode plate, an electrolyte, and a separator. In a charge-and-discharge cycle of the battery, active ions are shuttled between the positive electrode plate and the negative electrode plate by intercalation and deintercalation. The electrolyte serves to conduct ions between the positive electrode plate and the negative electrode plate. Disposed between the positive electrode plate and the negative electrode plate, the separator primarily serves to prevent a short circuit between the positive electrode plate and the negative electrode plate while allowing passage of ions.

In some embodiments, optionally, the injection coefficient of the electrolyte solution in the secondary battery described in this application is 1.8 to 4 g/Ah, and optionally 2.4 to 3.2 g/Ah. As an example, when the injection coefficient of the secondary battery is 2.8 g/Ah and the battery cell capacity is designed to be 3 Ah, the injection amount is 2.8 × 3 g = 8.4 g.

The following describes in detail a positive electrode plate, a negative electrode plate, and a separator of the secondary battery of this application.

### [Positive electrode plate]

The positive electrode plate includes a positive current collector and a positive electrode film layer that overlays at least one surface of the positive current collector. The positive electrode film layer includes a positive active material.

As an example, the positive current collector includes two surfaces opposite to each other in a thickness direction of the positive current collector. The positive electrode film layer is disposed on either or both of the two opposite surfaces of the positive current collector.

In some embodiments, the positive current collector may be a metal foil or a composite current collector. For example, the metal foil may be aluminum foil. The composite current collector may include a polymer material substrate and a metal layer formed on at least one surface of the polymer material substrate. The composite current collector may be formed by overlaying the polymer material substrate with a metal material (for example, aluminum, aluminum alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, optionally, a mass percent of Mn in a positive active material of the secondary battery is greater than or equal to 25%, based on a total mass of the positive active material.

Optionally, the positive active material is one or more of LiMₚMn₂₋ₚO₄, LiN_{q}Mn_{1-q}PO₄, or Li₁₊ₜMn_{1-w}L_{w}O₂₊ₜ, where 0 ≤ p ≤ 1, 0 ≤ q ≤ 0.5, 0 ≤ t ≤ 1, 0 ≤ w ≤ 0.5; and M, N, and L each independently represent one or more of Ni, Co, Fe, Cr, V, Ti, Zr, La, Ce, Rb, P, W, Nb, Mo, Sb, B, Al, or Si.

Further optionally, the positive active material is one or more of LiMₚMn₂₋ₚO₄ or Li₁₊ₜMn_{1-w}L_{w}O₂₊ₜ.

Further optionally, the positive active material is one or more of LiNi_{0.5}Mn_{1.5}O₄, LiNi_{0.5}Co_{0.2}Mn_{0.3}O₂, Li₂MnO₃, or LiMnPO₄.

When the positive active material of the secondary battery is of the above types, this application increases the energy density of the secondary battery, reduces the manufacturing cost, and gives rise to little environmental pollution.

In some embodiments, optionally, particles of the positive active material are monocrystalline or quasi-monocrystalline.

When the positive active material is monocrystalline, the active material is not prone to fragmenting, thereby reducing the probability of exposing a new surface, and in turn, reducing side reactions of the electrolyte solution, and improving the stability of the electrolyte solution.

In some embodiments, optionally, a particle diameter of the positive active material is 1 to 20 µm, and optionally 3 to 15 µm. The particle diameter of the positive active material may be determined by a method commonly used in the art, for example, by referring to the standard GB/T 19077-2016/ISO 13320:2009.

In some embodiments, optionally, a specific surface area of the positive active material is not greater than 1.5 m²/g, and optionally is 0.1 m²/g to 1 m²/g. The specific surface area of the positive active material may be determined by a method commonly used in the art, for example, by referring to the standard GB/T19587-2004 *Determination of the Specific Surface Area of Solids by Gas Adsorption Using the BET Method.*

When the particle diameter and surface area of the positive active material fall within the above range, this application reduces the side reactions, improves the stability of the electrolyte solution, and at the same time, and avoids an increase in the energy consumption of the process and deterioration of the processing performance of the positive electrode plate due to an excessively large particle diameter.

In some embodiments, the positive electrode film layer further optionally includes a binder. As an example, the binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin.

In some embodiments, optionally, the binder accounts for 0.1% to 3.5% of the total mass of the positive electrode film layer, and optionally 0.5% to 2.5%.

In some embodiments, the positive electrode film layer further optionally includes a conductive agent. As an example, the conductive agent may include at least one of superconductive carbon, acetylene black, carbon black, Ketjen black, carbon dots, carbon nanotubes, graphene, or carbon nanofibers.

In some embodiments, optionally, the conductive agent accounts for 0.05% to 5%, optionally 0.5% to 3%, of the total mass of the positive electrode film layer.

In some embodiments, the positive electrode plate may be prepared according to the following method: dispersing the ingredients of the positive electrode plate such as the positive active material, the conductive agent, the binder, and any other ingredients into a solvent (such as N-methyl-pyrrolidone) to form a positive electrode slurry, coating a positive current collector with the positive electrode slurry, and performing steps such as drying and cold pressing to obtain the positive electrode plate.

### [Negative electrode plate]

The negative electrode plate includes a negative current collector and a negative electrode film layer disposed on at least one surface of the negative current collector. The negative electrode film layer includes a negative active material.

As an example, the negative current collector includes two surfaces opposite to each other in a thickness direction of the negative current collector. The negative electrode film layer is disposed on either or both of the two opposite surfaces of the negative current collector.

In some embodiments, the negative current collector may be a metal foil or a composite current collector. For example, the metal foil may be copper foil. The composite current collector may include a polymer material substrate and a metal layer formed on at least one surface of the polymer material substrate. The composite current collector may be formed by overlaying the polymer material substrate with a metal material (for example, copper, copper alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the negative active material may be a negative active material well-known in the art for use in a battery. As an example, the negative active material may include at least one of the following materials: artificial graphite, natural graphite, soft carbon, hard carbon, silicon-based material, tin-based material, lithium titanium oxide, and the like. The silicon-based material may be at least one selected from elemental silicon, a silicon-oxygen compound, a silicon-carbon composite, a silicon-nitrogen composite, and a silicon alloy. The tin-based material may be at least one selected from elemental tin, a tin-oxygen compound, or a tin alloy. However, this application is not limited to such materials, and other conventional materials usable as a negative active material of a battery may be used instead. One of the negative active materials may be used alone, or at least two thereof may be used in combination.

In some embodiments, the negative electrode film layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), and carboxymethyl chitosan (CMCS).

In some embodiments, the negative electrode film layer further optionally includes a conductive agent. The conductive agent may be at least one selected from superconductive carbon, acetylene black, carbon black, Ketjen black, carbon dots, carbon nanotubes, graphene, or carbon nanofibers.

In some embodiments, the negative electrode film layer further optionally includes other agents, such as a thickener (for example, sodium carboxymethyl cellulose (CMC-Na)).

In some embodiments, the negative electrode plate may be prepared according to the following method: dispersing the ingredients of the negative electrode plate such as the negative active material, the conductive agent, and the binder and any other ingredients in a solvent (such as deionized water) to form a negative electrode slurry, coating a negative current collector with the negative electrode slurry, and performing steps such as drying and cold calendering to obtain the negative electrode plate.

### [Separator]

In some embodiments, the secondary battery further includes a separator. The type of the separator is not particularly limited in this application, and may be any well-known porous separator that is highly stable both chemically and mechanically.

In some embodiments, the separator may be made of a material that is at least one selected from glass fiber, non-woven fabric, polyethylene, polypropylene, and polyvinylidene difluoride. The separator may be a single-layer film or a multilayer composite film, without being particularly limited. When the separator is a multilayer composite film, materials in different layers may be identical or different, without being particularly limited.

A third aspect of this application provides a battery module. The battery module includes the secondary battery according to the second aspect of this application.

A fourth aspect of this application provides a battery pack. The battery pack includes the battery module according to the third aspect of this application.

A fifth aspect of this application provides an electrical device. The electrical device includes at least one of the secondary battery according to the second aspect, the battery module according to the third aspect, or the battery pack according to the fourth aspect of this application. The secondary battery, the battery module, or the battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for use in the electrical device according to practical requirements of the electrical device.

Next, a secondary battery, a battery module, a battery pack, and an electrical device according to this application are described below in detail with due reference to drawings.

In some embodiments, the positive electrode plate, the negative electrode plate, and the separator may be made into an electrode assembly by winding or stacking.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The soft package may be made of plastic such as polypropylene, polybutylene terephthalate, or polybutylene succinate.

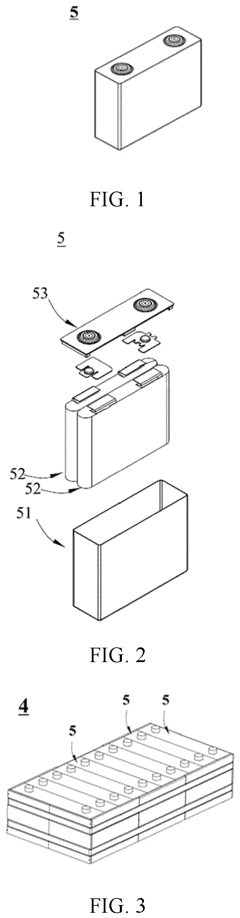

The shape of the secondary battery is not particularly limited in this application, and may be cylindrical, prismatic or any other shape. FIG. 1 shows a prismatic secondary battery 5 as an example.

In some embodiments, referring to FIG. 2, the outer package may include a housing 51 and a cover plate 53. The housing 51 may include a bottom plate and a side plate connected to the bottom plate. The bottom plate and the side plate close in to form an accommodation cavity. An opening that communicates with the accommodation cavity is created on the housing 51. The cover plate 53 can fit and cover the opening to close the accommodation cavity. The positive electrode plate, the negative electrode plate, and the separator may be made into the electrode assembly 52 by winding or stacking. The electrode assembly 52 is packaged in the accommodation cavity. The electrolyte solution infiltrates in the electrode assembly 52. The number of electrode assemblies 52 in a secondary battery 5 may be one or more, and may be selected by a person skilled in the art as actually required.

In some embodiments, the secondary battery may be assembled into a battery module. The battery module may include one or more secondary batteries, and the specific number of secondary batteries in a battery module may be selected by a person skilled in the art depending on practical applications and capacity of the battery module.

FIG. 3 shows a battery module 4 as an example. Referring to FIG. 3, in the battery module 4, a plurality of secondary batteries 5 may be arranged sequentially along a length direction of the battery module 4. Alternatively, the secondary batteries may be arranged in any other manner. Further, the plurality of secondary batteries 5 may be fixed by a fastener.

Optionally, the battery module 4 may further include a shell that provides an accommodation space. The plurality of secondary batteries 5 are accommodated in the accommodation space.

In some embodiments, the battery module may be assembled to form a battery pack. The battery pack may include one or more battery modules, and the specific number of battery modules in a battery pack may be selected by a person skilled in the art depending on practical applications and capacity of the battery pack.

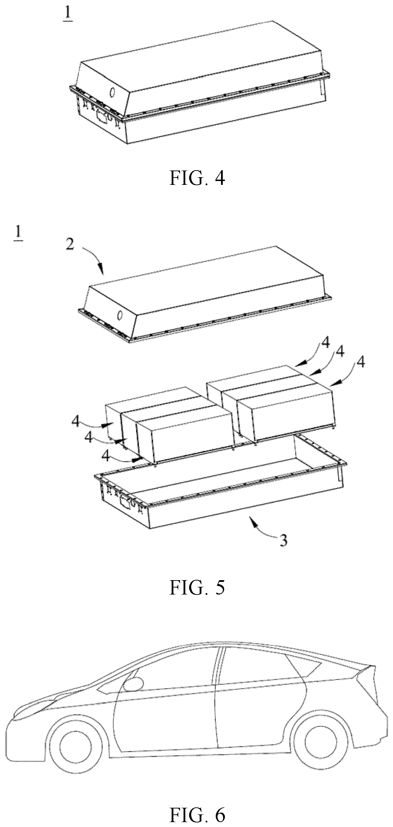

FIG. 4 and FIG. 5 show a battery pack 1 as an example. Referring to FIG. 4 and FIG. 5, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

FIG. 6 shows an electrical device as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

In another example, the device may be a mobile phone, a tablet computer, a notebook computer, or the like. The device is generally required to be thin and light, and may have a secondary battery as a power supply.

### Embodiments

The following describes some embodiments of this application. The embodiments described below are illustrative, and are merely intended to construe this application but not to limit this application. Unless techniques or conditions are otherwise expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

Sources of raw materials used in the embodiments of this application are shown in the following table:

| Name | Specification |
|---|---|
| Polyvinylidene difluoride (PVDF) | Weight-average molecular weight 900,000 |
| N-methyl-pyrrolidone (NMP) | Purity > 99.9% |
| Ethylene | Purity > 99.9% |
| carbonate (EC) | |
| Dimethyl carbonate (DMC) | Purity > 99.9% |
| 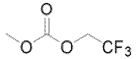 | Purity > 99.9% |
| 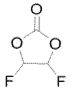 | Purity > 99.9% |
| 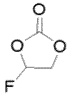 | Purity > 99.9% |
| 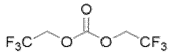 | Purity > 99.9% |
| 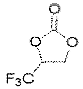 | Purity > 99.9% |
| 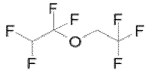 | Purity > 99.9% |
| 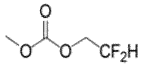 | Purity > 99.9% |
| 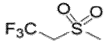 | Purity > 99.9% |
| 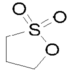 | Purity > 99.9% |
| 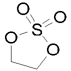 | Purity > 99.9% |

### Embodiment 1

### Preparing an electrolyte solution

Mixing various organic solvents well in an argon atmosphere glovebox (H₂O < 0.1 ppm, O₂ < 0.1 ppm) at the mass ratio specified in Table 1, adding the salt and additives shown in Table 1, and stirring well to obtain the electrolyte solution in Embodiment 1.

### Preparing a positive electrode plate

Mixing well LiNi_{0.5}Mn_{1.5}O₄ (LNMO) as a positive active material, carbon black Super P as a conductive agent, and polyvinylidene difluoride (PVDF) as a binder at a mass ratio of 96: 2.5: 1.5 in an appropriate amount of NMP solvent to form a uniform positive electrode slurry. Coating both surfaces of a positive current collector aluminum foil with the positive electrode slurry evenly. Performing drying and cold-pressing to obtain a positive electrode plate. The coating concentration of the positive active material on a single side (surface) of the positive current collector is 0.02 g/cm².

### Preparing a negative electrode plate

Mixing well artificial graphite as a negative active material, carbon black (Super P) as a conductive agent, styrene-butadiene rubber as a binder, and sodium carboxymethyl cellulose as a thickener in an appropriate amount of deionized water solvent at a mass ratio of 96: 1:1:2 to form a uniform negative electrode slurry. Coating one surface of a negative current collector copper foil with the negative electrode slurry evenly. Performing drying and cold-pressing to obtain a negative electrode plate. The coating concentration of the negative active material on a single side (surface) of the negative current collector is 0.008 g/cm².

### Separator

Using a polypropylene film as a separator.

### Preparing a secondary battery

Stacking the positive electrode plate, the separator, and the negative electrode plate in sequence so that the separator is located between the positive electrode plate and the negative electrode plate to serve a function of isolation, so as to form an electrode assembly. Placing the electrode assembly into a battery housing, performing drying and then injecting an electrolyte solution, and performing steps such as chemical formation and standing to obtain a secondary battery disclosed in Embodiment 1. The injection coefficient of the electrolyte solution in the resulting secondary battery is 2.8 g/Ah.

### Embodiments 2 to 11 and Comparative Embodiments 1 to 3

Conditions in Embodiments 2 to 11 and Comparative Embodiments 1 to 3 are identical to those in Embodiment 1 except the different conditions shown in Table 1 and the NCM523 (that is, LiNi_{0.5}Co_{0.2}Mn_{0.3}O₂) used as a positive active material in Embodiment 11 and Comparative Embodiment 3.

### Test methods of relevant parameters

### 1. Nuclear magnetic resonance NMR spectroscopy

### 1.1 Hydrogen NMR spectroscopy

Mixing 25 mg of electrolyte solution and 25 mg of 4-fluoropyridine, and then adding the mixture into 0.5 g of deuterated acetonitrile to undergo hydrogen NMR spectroscopy. In the resulting NMR spectrum, the chemical shift of hydrogen in the 4-fluoropyridine is 7.09 ppm and 8.57 ppm. Integrating the peak areas in the range of 7.0 ppm to 7.2 ppm and the range of 8.45 ppm to 8.65 ppm, and normalizing the integrated area to 1. Using a similar method to integrate the peak areas in the range of 0.5 ppm to 10 ppm. Subtracting the peak area corresponding to the hydrogen in the 4-fluoropyridine and the peak area corresponding to the hydrogen in the deuterated acetonitrile in the range of 2.0 ppm to 1.9 ppm, normalizing the remaining peak area in the hydrogen NMR spectrum, and recording the normalized result as S_{H}.

### 1.2 Fluorine NMR spectroscopy

Mixing 25 mg of electrolyte solution and 25 mg of 4-fluoropyridine, and then adding the mixture into 0.5 g of deuterated acetonitrile to undergo fluorine NMR spectroscopy. In the resulting NMR spectrum, integrating the peak area of the fluorine corresponding to the 4-fluoropyridine in the range of -102 ppm to -104 ppm, and normalizing the integrated peak area to 1. Using a similar method to integrate the peak area in the range of -280 ppm to 80 ppm, and subtracting the peak area corresponding to the fluorine in the lithium salt in the range of -72 ppm to -75 ppm (LiPF₆) and the range of 51 ppm to 60 ppm (LiFSI) as well as the peak area corresponding to the fluorine in the 4-fluoropyridine in the range of -102 ppm to -104 ppm. Normalizing the remaining peak area in the fluorine NMR spectrum, and recording the normalized peak area as S_{F}.

### 2. Testing a battery cell capacity (C)

Charging a lithium-ion battery at a constant current of 0.1C at 25 °C until the voltage reaches an upper-limit cut-off voltage, and then charging the battery at a constant voltage equivalent to the upper-limit cut-off voltage until the current is less than 0.05C. Subsequently, discharging the battery at a current of 0.1C until the voltage reaches a lower-limit cut-off voltage, and recording the discharge capacity C (Ah).

### 3. Testing the cycle performance of a secondary battery

Charging a secondary battery at a constant current of 0.1C at 25 °C until an upper-limit cut-off voltage, and then charging the battery at a constant voltage equivalent to the upper-limit cut-off voltage until the current reaches 0.05C. Leaving the battery to stand for 5 minutes, and then discharging the secondary battery at a constant current of 0.1C until a lower-limit cut-off voltage, thereby completing one charge-discharge cycle. The discharge capacity at this cycle is an initial discharge capacity of the secondary battery. Repeating the above method to charge and discharge the secondary battery for a number of cycles until the discharge capacity of the secondary battery fades to 70% of the initial discharge capacity, and recording the number of cycles of the secondary battery at this time. The larger the number of cycles of the secondary battery, the longer the anticipated cycle lifespan of the secondary battery.

### 4. Testing the storage performance of a secondary battery

Charging a secondary battery at a constant current of 0.1C at 25 °C until an upper-limit cut-off voltage, and then charging the battery at a constant voltage equivalent to the upper-limit cut-off voltage until the current drops to 0.05C. At this time, the secondary battery is in a fully charged state. Storing the fully charged secondary battery in a 60 °C environment, taking out the battery every 10 days, and discharging the taken out battery at a constant current of 0.1C until a lower-limit cut-off voltage to obtain a discharge capacity at the end of this storage period, and then charging the secondary battery according to the above charging method until a fully charged state, and then storing the battery back in the 60 °C environment. Repeating the above steps until the discharge capacity of the secondary battery at the end of a storage period fades to 70% of the initial discharge capacity, and then recording the total number of days of storage of the secondary battery. A larger number of days of storage of the secondary battery indicates a longer anticipated lifespan of the secondary battery stored at high temperature.

It is hereby noted that in the above performance test, in Embodiments 1 to 11 and Comparative Embodiments 1 to 2, the upper-limit cut-off voltage is 4.9 V, and the lower-limit cut-off voltage is 3.5 V; in Embodiment 11 and Comparative Embodiment 3, the upper-limit cut-off voltage is 4.5 V, and the lower-limit cut-off voltage is 2.8 V. Table 1 shows the performance test results of Embodiments 1 to 12 and Comparative Embodiments 1 to 3.

**Table 1 Experimental conditions and test results of Embodiments 1 to 12 and Comparative Embodiments 1 to 3 (To be continued)**

| Comparative Embodiment (C.E.)/ Embodiment (E) | C.E. 1 | C.E. 2 | C.E. 3 | E1 | E2 | E3 | E4 |
|---|---|---|---|---|---|---|---|
| 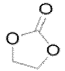 | 30 | 30 | 30 | 55 | 20 | | |
| 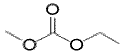 | 70 | 40 | 70 | | | | |
| 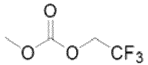 | | 30 | | 45 | 70 | 70 | |
| 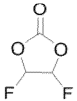 | | | | | | | 30 |
| 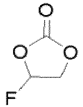 | | | | | 10 | | |
| 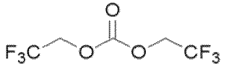 | | | | | | | 70 |
| 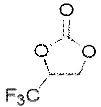 | | | | | | 30 | |
| 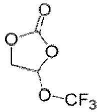 | | | | | | | |
| 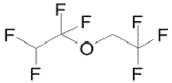 | | | | | | | |
| 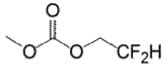 | | | | | | | |
| 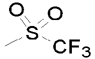 | | | | | | | |
| 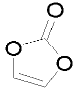 | | | | | | | |
| 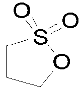 | | | | | | | |
| 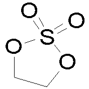 | | | | | | | |
| LiPF₆ (mol·L⁻¹) | 1 | 1 | 1 | 1 | 1 | 1 | 1 |
| x | 0.0% | 9.6% | 0.0% | 17.9% | 29.5% | 40.6% | 50.0% |
| Number of cycles at room temperature | 205 | 550 | 712 | 854 | 976 | 1085 | 1003 |
| Number of days of storage at high temperature | 10 | 50 | 60 | 70 | 90 | 90 | 90 |

**Table 1 (Continued)**

| Comparative Embodiment (C.E.)/ Embodiment (E) | E5 | E6 | E7 | E8 | E9 | E10 | E11 |
|---|---|---|---|---|---|---|---|
| 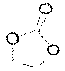 | | 10 | | | | | |
| 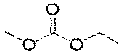 | | | | | | | |
| 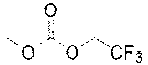 | 70 | 70 | | 70 | 70 | 70 | 70 |
| 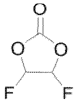 | 10 | | | | | | |
| 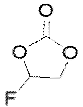 | | 10 | | | | | |
| 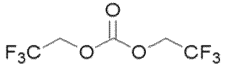 | | | | | | | |
| 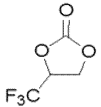 | | | | 30 | 30 | 30 | 30 |
| 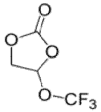 | | | | | | | |
| 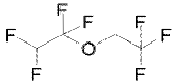 | 20 | | | | | | |
| 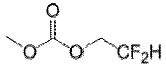 | | 10 | | | | | |
| 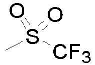 | | | 100 | | | | |
| 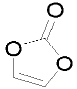 | | | | 1 | | | 1 |
| 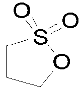 | | | | | 1 | | 0.5 |
| 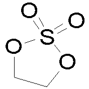 | | | | | | 1 | 0.5 |
| LiPF₆ (mol·L⁻¹) | 1 | 1 | 1 | 1 | 1 | 1 | 1 |
| x | 60% | 30.0% | 50.0% | 40.6% | 40.6% | 40.6% | 40.6% |
| Number of cycles at room temperature | 914 | 988 | 1002 | 1109 | 1078 | 1132 | 2432 |
| Number of days of storage at high temperature | 80 | 90 | 90 | 100 | 90 | 100 | 600 |

As can be seen from Table 1, in contrast to Comparative Embodiments 1 to 3, when the electrochemical stability coefficient x of the electrolyte solution is 0.18 to 0.60, the secondary battery that employs the electrolyte solution exhibits higher storage performance and cycle performance. In addition, when x is 0.25 to 0.55, the storage performance and cycle performance of the corresponding secondary battery are higher. In addition, by adjusting the dosages of the first solvent and the second solvent as well as the type and dosage of the film-forming additive, this application can further improve the storage performance and cycle performance of the secondary battery.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. An electrolyte solution, comprising a solvent and a fluorine-containing lithium salt, wherein an electrochemical stability coefficient of the electrolyte solution is x = S_{F}/(S_{F} + 4S_{H}), ranging from 0.18 to 0.6, optionally 0.25 to 0.55, wherein
S_{F} is a peak area of fluorine except fluorine corresponding to a lithium salt and fluorine corresponding to 4-fluoropyridine in a chemical shift range of -280 ppm to 80 ppm observed in fluorine nuclear magnetic resonance NMR spectroscopy for a mixture of the electrolyte solution and the 4-fluoropyridine mixed at a mass ratio of 1:1, and a peak area of the fluorine corresponding to the 4-fluoropyridine in a chemical shift range of -102 ppm to -104 ppm is normalized to 1;
S_{H} is a peak area of hydrogen except hydrogen corresponding to deuterated acetonitrile and 4-fluoropyridine in a chemical shift range of 0.5 ppm to 10 ppm observed in hydrogen nuclear magnetic resonance NMR spectroscopy for a mixture of the electrolyte solution and the 4-fluoropyridine mixed at a mass ratio of 1:1, and a peak area of the hydrogen corresponding to the 4-fluoropyridine in a chemical shift range of 7.0 ppm to 7.2 ppm and a chemical shift range of 8.45 ppm to 8.65 ppm is normalized to 1; and
the electrolyte solution contains neither the deuterated acetonitrile nor the 4-fluoropyridine.

2. The electrolyte solution according to claim 1, wherein the electrolyte solution comprises a first solvent and a second solvent;
the first solvent is one or more selected from a fluoroether, a fluorocarbonate ester, a fluorocarboxylate ester, a fluorobenzene, or a fluorosulfone;
optionally, the first solvent is one or more of 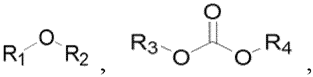 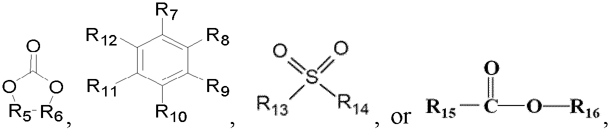 wherein R₁, R₃, R₅, and R₁₃ each are independently selected from C₁ to C₆ fluoroalkanes; R₂, R₄, R₆, R₁₄, R₁₅, and R₁₆ each are independently selected from C₁ to C₆ alkanes or C₁ to C₆ fluoroalkanes; R₇ to R₁₂ each are independently selected from a C₁ to C₆ fluoroalkane, fluorine, or hydrogen; at least one of R₇ to R₁₂ is selected from fluorine or a fluoroalkane; and at least one of R₁₅ or R₁₆ is selected from C₁ to C₆ fluoroalkanes;
further optionally, the first solvent is one or more of 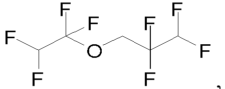 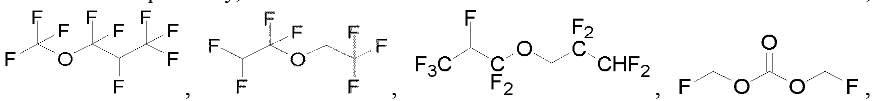 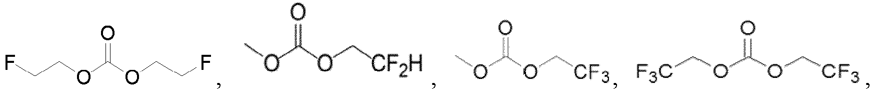 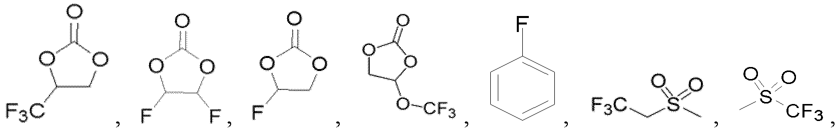 or 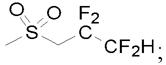
the second solvent is one or more selected from a non-fluorinated carbonate ester, a non-fluorinated carboxylate ester, a non-fluorinated ether, or a non-fluorinated sulfone;
optionally, the second solvent is one or more of 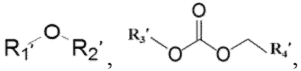 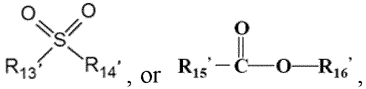 wherein R₁', R₂', R₃', R₁₃', R₁₄', and R₁₆' each are independently selected from C₁ to C₆ alkanes; and R₄' and R₁₅' each are independently selected from a C₁ to C₆ alkane or hydrogen; and
optionally, the second solvent is one or more of ethyl methyl carbonate, dimethyl carbonate, diethyl carbonate, ethylene carbonate, propylene carbonate, methyl formate, methyl acetate, ethyl acetate, propyl acetate, methyl propionate, ethyl propionate, or propyl propionate.

3. The electrolyte solution according to claim 2, wherein a mass percent y₁ of the first solvent is 10% to 100%, optionally 45% to 100%, and further optionally 80% to 100%, based on a total mass of the first solvent and the second solvent.

4. The electrolyte solution according to claim 2 or 3, wherein a mass percent y₂ of the second solvent is 0% to 90%, optionally 0% to 55%, and further optionally 0% to 20%, based on a total mass of the first solvent and the second solvent.

5. The electrolyte solution according to any one of claims 3 to 4, wherein the mass percent y₁ of the first solvent and a mass percent y₂ of the second solvent satisfy: y₁/y₂ ≥ 0.82, optionally y₁/y₂ ≥ 2.33, further optionally y₁/y₂ ≥ 4, and still further optionally y₁/y₂ ≥ 5.67.

6. The electrolyte solution according to any one of claims 1 to 5, wherein the electrolyte solution further comprises a film-forming additive, and the film-forming additive is one or more selected from a chain or cyclic sulfate ester, a chain or cyclic sulfonate ester, a chain or cyclic carbonate ester, a polycyclic sulfate ester, or a polycyclic sulfonate ester;
optionally, the film-forming additive is one or more of 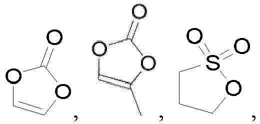 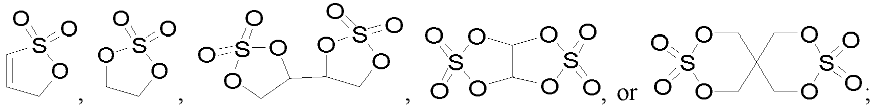 and
further optionally, the film-forming additive is one or more of

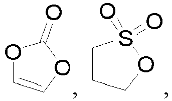

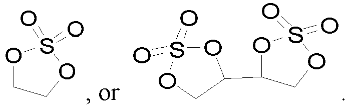

7. The electrolyte solution according to claim 6, wherein a mass percent of the film-forming additive is 0.1% to 10%, optionally 0.5% to 7%, and further optionally 1% to 5%, based on a total mass of the first solvent and the second solvent.

8. The electrolyte solution according to claim 6 or 7, wherein the film-forming additive comprises 0.5% to 1.0% 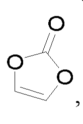 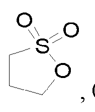 , 0.5% to 2.5% 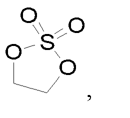 , , 0.5% to 2% , or 0.5% to 2% 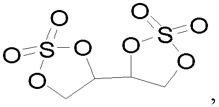 based on a total mass of the first solvent and the second solvent.

9. The electrolyte solution according to any one of claims 1 to 8, wherein the lithium salt comprises one or more of lithium hexafluorophosphate or lithium bis(fluorosulfonyl)imide.

10. The electrolyte solution according to any one of claims 1 to 9, wherein a concentration of the lithium salt is 0.7 to 2.5 mol/L, and optionally 1 to 1.5 mol/L.

11. The electrolyte solution according to any one of claims 1 to 10, wherein an acidity of the electrolyte solution is less than or equal to 50 ppm, and a purity of each solvent in use is greater than or equal to 99.8%.

12. A secondary battery, wherein the secondary battery comprises the electrolyte solution according to any one of claims 1 to 11.

13. The secondary battery according to claim 12, wherein
a mass percent of Mn in a positive active material of the secondary battery is greater than or equal to 25%, based on a total mass of the positive active material;
optionally, the positive active material is one or more of LiMₚMn₂₋ₚO₄, LiN_{q}Mn_{1-q}PO₄, or Li₁₊ₜMn_{1-w}L_{w}O₂₊ₜ, wherein 0 ≤ p ≤ 1, 0 ≤ q ≤ 0.5, 0 ≤ t ≤ 1, 0 ≤ w ≤ 0.5; and M, N, and L each independently represent one or more of Ni, Co, Fe, Cr, V, Ti, Zr, La, Ce, Rb, P, W, Nb, Mo, Sb, B, Al, or Si;
further optionally, the positive active material is one or more of LiMₚMn₂₋ₚO₄ or Li₁₊ₜMn_{1-w}L_{w}O₂₊ₜ; and
further optionally, the positive active material is one or more of LiNi_{0.5}Mn_{1.5}O₄, LiNi_{0.5}Co_{0.2}Mn_{0.3}O₂, Li₂MnO₃, or LiMnPO₄.

14. The secondary battery according to claim 12 or 13, wherein particles of the positive active material are monocrystalline or quasi-monocrystalline.

15. The secondary battery according to any one of claims 12 to 14, wherein a particle diameter of the positive active material is 1 to 20 µm, and optionally 3 to 15 µm.

16. The secondary battery according to any one of claims 12 to 15, wherein a specific surface area of the positive active material is not greater than 1.5 m²/g, and optionally is 0.1 m²/g to 1 m²/g.

17. A battery module, comprising the secondary battery according to any one of claims 12 to 16.

18. A battery pack, comprising the battery module according to claim 17.

19. An electrical device, comprising at least one of the secondary battery according to any one of claims 12 to 16, the battery module according to claim 17, or the battery pack according to claim 18.
